# EUROPEAN PATENT SPECIFICATION

(11) **EP 3 211 139 B1**
(45) Date of publication and mention of the grant of the patent: **25.01.2023**
(21) Application number: 15852149.2
(22) Date of filing: 30.09.2015
(51) Int. Cl.: E02D 27/38, E02D 31/04, C09J 7/38

(54) **WATERPROOF SHEET AND METHOD FOR WATERPROOFING CONSTRUCTION**
WASSERFESTE FOLIE UND VERFAHREN ZUR HYDROPHOBIERUNG EINER KONSTRUKTION
FEUILLE IMPERMÉABLE ET PROCÉDÉ D'IMPERMÉABILISATION DE CONSTRUCTION

(30) Priority: 22.10.2014 JP 2014215300
(43) Date of publication of application: 30.08.2017
(73) Proprietor: Shin-Etsu Chemical Co., Ltd., Tokyo 100-0004 (JP)
(72) Inventor: UNO, Takao, Annaka-shi Gunma 379-0224 (JP); NAKAJIMA, Takeshi, Tokyo 100-0004 (JP); YAMAGUCHI, Hisaharu, Annaka-shi Gunma 379-0195 (JP); YODA, Masahiro, Annaka-shi Gunma 379-0195 (JP)
(74) Representative: Mewburn Ellis LLP
(86) International application number: PCT/JP2015/077705
(87) International publication number: WO 2016/063693

(56) References cited:
- EP-A1- 0 614 959
- EP-A1- 2 505 629
- WO-A1-2014/069071
- JP-A- 2003 047 526
- JP-A- 2008 285 584
- JP-A- 2012 215 057
- JP-A- 2012 224 077
- JP-A- 2014 070 482
- US-A1- 2014 090 771

## Description

### TECHNICAL FIELD

This invention relates to a waterproof sheet and a waterproof construction method using waterproof sheets, which are effective for preventing penetration of rain or water; and more particularly, to a waterproof sheet and a waterproof construction method using waterproof sheets, which ensure stable sealing performance even under high-humidity or high-temperature conditions because the tacky layer possesses a consistent level of adhesive properties even when the waterproof sheet is immersed overall in water.

### BACKGROUND ART

Waterproof sheets are used at sites where failures like degradation and rupture occur as a result of rust formation due to penetration of rainwater, for preventing such failures. For example, in conjunction with outdoor tanks of middle to large volume such as oil tanks and chemical storage tanks, waterproof sheets are attached to the boundary between the tank bottom and a pedestal to cover the boundary, for thereby preventing penetration of rainwater, controlling rust generation at the tank bottom, and preventing the tank from rupture.

The butyl rubber or petrolatum base waterproof sheets used in these applications are considered to comply with rainfall within normal expectation. Also, by a choice of fully weather resistant silicone as the sheet material, waterproof sheets having waterproofness over a long period of time are used. These waterproof sheets, however, do not always insure waterproofness in a higher humidity or temperature environment (Patent Document 1: JP 3580887, Patent Document 2: JP 1332493, Patent Document 3: JP 1405628, Patent Document 4: JP 4076673, Patent Document 5: JP-A 2012-215057 and EP2505629A).

After aseismic reinforcing work of bridges and piers, waterproof sheets are attached to a boundary portion between the pier and a steel strip wrapped therearound so as to cover the boundary portion, which is likewise effective for preventing penetration of rainwater, controlling rust generation on the steel strips, and preventing the pier from degradation. In this application as well, the waterproof sheets of silicone material can be waterproof sheets maintaining waterproofness over a long period of time. However, when applied to bridge piers which are considered to be mostly used at the waterside near river or sea, these waterproof sheets do not always insure waterproofness in a higher humidity environment (Patent Document 6: JP-A 2014-070482 and US2014/090771A, Non-Patent Document 1: Fujiwara et al., "Bridges and Foundations (repair of gaps at seawater-damaged concrete girder edges)", Kensetsu Tosho Co., Dec. 2004, p33-39).

The waterproof silicone base sheets having a tacky layer of a silicone composition proposed in Patent Documents 5 and 6 have been confirmed to be quite effective in long-term waterproofness. However, where the adherend is made of a porous material such as asphalt and mortar, and the sheets are used in a hot environment above 100°C, there is the problem that the tacky layer may flow away, leaving a concern that tackiness will be reduced.

### PRIOR ART DOCUMENTS

### PATENT DOCUMENTS

Patent Document 1: JP 3580887
Patent Document 2: JP 1332493
Patent Document 3: JP 1405628
Patent Document 4: JP 4076673
Patent Document 5: JP-A 2012-215057, EP2505629A
Patent Document 6: JP-A 2014-070482, US2014/090771
Non-Patent Document 1: Fujiwara et al., "Bridges and Foundations (repair of gaps at seawater-damaged concrete girder edges)", Kensetsu Tosho Co., Dec. 2004, p33-39

### SUMMARY OF THE INVENTION

### PROBLEMS TO BE SOLVED BY THE INVENTION

An object of the invention, which has been made under the above-mentioned circumstances, is to provide a waterproof sheet having long-term waterproofness so that it may be used over a long term without degradation of physical properties, and a waterproof construction method. More particularly, while the tacky layer of the waterproof sheet is correlated to working efficiency during construction and the durability of the sheet after construction, an object is to provide a waterproof sheet which possesses excellent waterproofness even in a humid or hot environment, in contrast to the prior art waterproof sheets that are weak in a humid or hot environment, and a waterproof construction method.

### MEANS FOR SOLVING THE PROBLEMS

To attain the above objects, the invention provides a waterproof sheet and a waterproof construction method, as defined in the claims.

### ADVANTAGEOUS EFFECTS OF THE INVENTION

The waterproof sheet of the invention has long-term waterproofness so that it may be used over a long term without degradation of physical properties. Particularly when the hardness and bonding force of the tacky layer are delimited, the waterproof sheet is durable in long-term service. The waterproof sheet exhibits excellent durable tackiness even in a humid or hot environment.

### BRIEF DESCRIPTION OF THE DRAWINGS

FIG. 1 is a cross-sectional view of a waterproof sheet in one embodiment of the invention.
FIG. 2 is a schematic cross-sectional view illustrating an installation state of an outdoor tank.
FIG. 3 is a partially cutaway, cross-sectional view illustrating a waterproofing construction method in an embodiment of the invention.
FIG. 4 is a partially cutaway, perspective view illustrating a waterproofing construction method in one embodiment of the invention wherein waterproof sheets are arranged to cover an outdoor tank, pedestal and boundary therebetween.
FIG. 5 is a partially cutaway, enlarged, plan view showing waterproof sheets overlapped.
FIG. 6 is a cross-sectional view illustrating a waterproofing construction method in an embodiment of the invention wherein edges of waterproof sheets are bonded with a sealant.
FIG. 7 schematically illustrates a bridge and pier.
FIG. 8 schematically illustrates a bridge pier.
FIG. 9 illustrates how to repair the pier in plural layers.
FIG. 10 illustrates an embodiment wherein waterproof sheets are arranged at a repaired portion between the bridge and the pier so as to cover the repaired portion.

### EMBODIMENTS FOR CARRYING OUT THE INVENTION

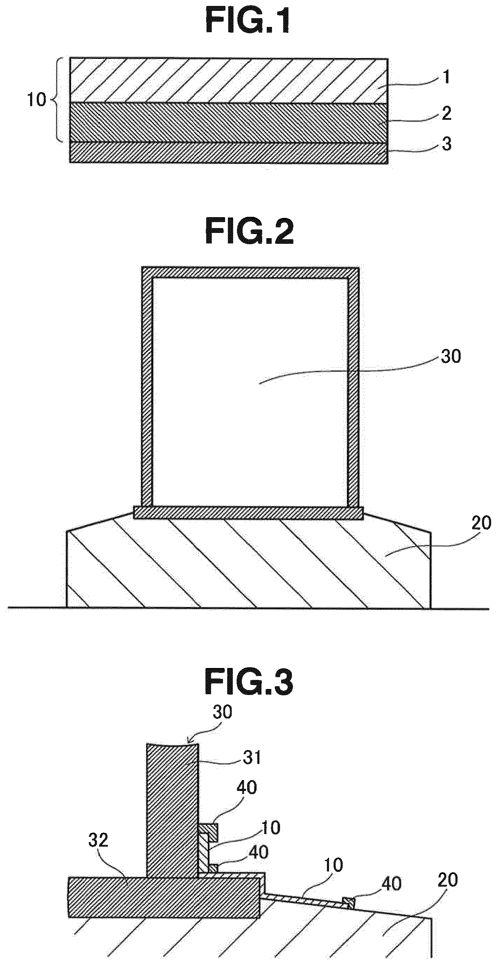

The waterproof sheet of the invention has tackiness (or pressure-sensitive adhesion) on at least one surface of a base layer. Although the waterproof sheet may be tacky over all the base layer, it is preferred from the standpoint of efficient working during waterproof construction using the sheet that one surface of the sheet be non-tacky and the other surface be tacky. Typically a cover film is releasably laid on the tacky surface. On use, the cover film is peeled off and the tacky surface is attached to the necessary site. That is, as shown in FIG. 1, the waterproof sheet 10 of the invention includes a base layer 1 and a tacky layer 2 laid on one surface thereof, and typically a cover film 3 such as polyethylene (PE) film is releasably laid on the tacky layer 2. On use, the cover film 3 is peeled off and the tacky layer 2 is attached to the preselected adherend.

In the invention, the tacky layer formed on one surface of the base layer plays the critical role. In view of weather resistance and tight adhesion to the base, the tacky layer is composed of a silicone resin or gel having tackiness or pressure-sensitive adhesion. Especially when an addition curable silicone composition is used and cured, there is obtained a tacky layer which has a certain hardness and strength, will tightly adhere to the base and various parts, and has a sufficient tackiness to secure the sheet.

The silicone composition for the tacky layer is an addition curable silicone composition comprising:
(A) 20 to 100 parts by weight of an organopolysiloxane containing at least two silicon-bonded alkenyl groups per molecule,
(B) 0 to 80 parts by weight of a resinous copolymer predominantly comprising R²₃SiO_{1/2} units and SiO₂ units, wherein R² is a substituted or unsubstituted monovalent hydrocarbon group, and R² contains an alkenyl group, the total amount of components (A) and (B) being 100 parts by weight
(C) an organohydrogenpolysiloxane containing at least two silicon-bonded hydrogen atoms (i.e., SiH groups), in an amount of 0.5 to 20 parts by weight per 100 parts by weight of components (A) and (B) combined, and
(D) an addition reaction catalyst in an amount of 1 to 1,000 ppm based on the total alkenyl-containing organopolysiloxanes as components (A) and (B),
wherein a cured product of the composition has surface tack. The tacky layer is formed of a cured product of the composition.

Component (A) in the addition curable silicone composition is an organopolysiloxane containing on average at least two silicon-bonded alkenyl groups per molecule. The organopolysiloxane as component (A) may have the average compositional formula (I).

R¹ₐSiO_{(4-a)/2} (I)

Herein, R¹ is each independently a substituted or unsubstituted monovalent hydrocarbon group of 1 to 10 carbon atoms, preferably 1 to 8 carbon atoms, and a is a positive number in the range of 1.5 to 2.8, preferably 1.8 to 2.5, and more preferably 1.95 to 2.05. Examples of the silicon-bonded, substituted or unsubstituted, monovalent hydrocarbon group represented by R¹ include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl, and substituted forms of the foregoing in which some or all hydrogen atoms are substituted by halogen atoms (e.g., fluoro, bromo or chloro), cyano radicals or the like, such as chloromethyl, chloropropyl, bromoethyl, trifluoropropyl and cyanoethyl. Preferably, methyl accounts for at least 90 mol% of all R¹ groups.

It is necessary that at least two R¹ groups be alkenyl groups, preferably having 2 to 8 carbon atoms, more preferably 2 to 6 carbon atoms. It is preferred that alkenyl groups account for 0.00001 to 0.05 mol/g, more preferably 0.0001 to 0.01 mol/g of all organic groups R¹ (i.e., substituted or unsubstituted monovalent hydrocarbon groups). The alkenyl group may be bonded to a silicon atom at the end of the molecular chain or a silicon atom midway the molecular chain or both. The preferred organopolysiloxane contains at least alkenyl groups bonded to silicon atoms at both ends of the molecular chain. If the alkenyl content is less than 0.00001 mol/g, no sufficient rubber properties may be obtainable. If the alkenyl content exceeds 0.05 mol/g, hardness may become too high and bonding force be lost.

Since the degree of polymerization (DOP) is not particularly limited, an organopolysiloxane which is liquid at normal temperature is preferred. Typically an organopolysiloxane having an average DOP of about 50 to 20,000, preferably about 100 to 10,000, and more preferably about 100 to 2,000 as measured by gel permeation chromatography (GPC) versus polystyrene standards is used.

With respect to the structure, the organopolysiloxane typically has a linear structure based on a backbone consisting of repeating diorganosiloxane (R¹₂SiO_{2/2}) units and capped at each end of the molecular chain with a triorganosiloxy (R¹₃SiO_{1/2}) group or hydroxydiorganosiloxy ((HO)R¹₂SiO_{1/2}) group, although it is acceptable that a branched or cyclic structure be partially included.

Component (B) is a resinous copolymer (or copolymer of three-dimensional network structure) predominantly comprising R²₃SiO_{1/2} units and SiO₂ units. Herein R² is a substituted or unsubstituted monovalent hydrocarbon group, preferably having 1 to 10 carbon atoms, more preferably 1 to 8 carbon atoms. Examples of the monovalent hydrocarbon group represented by R² include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl, and substituted forms of the foregoing in which some or all hydrogen atoms are substituted by halogen atoms (e.g., fluoro, bromo or chloro), cyano radicals or the like, such as chloromethyl, chloropropyl, bromoethyl, trifluoropropyl and cyanoethyl.

The resinous copolymer (B) may consist of R²₃SiO_{1/2} units and SiO₂ units while it may optionally further contain R²₂SiO units and/or R²SiO_{3/2} units wherein R² is as defined above, in a total amount of up to 50%, preferably up to 40% based on the total weight of the copolymer. The molar ratio of R²₃SiO_{1/2} units to SiO₂ units (R²₃SiO_{1/2}/SiO₂) should be in a range of 0.5/1 to 1.5/1, preferably 0.5/1 to 1.3/1. If the molar ratio is less than 0.5 or more than 1.5, no satisfactory rubber hardness and strength are obtainable. Further, the resinous copolymer (B) should preferably contain at least two alkenyl groups per molecule. The content of alkenyl is typically at least 0.0001 mol/g, preferably 0.0001 to 0.001 mol/g. An alkenyl content of less than 0.0001 mol/g may lead to unsatisfactory rubber physical properties whereas an alkenyl content of more than 0.001 mol/g may lead to too high a hardness and hence, a drop of bonding force.

The resinous copolymer may be either a liquid having fluidity at normal temperature (specifically, a viscosity of at least 10 mPa·s, preferably at least 50 mPa·s at 25°C) or a solid having no fluidity at normal temperature. In the case of a solid state, the copolymer may be dissolved in an organic solvent such as toluene. The resinous copolymer may be obtained from hydrolysis of a suitable chlorosilane or alkoxysilane by the procedure well known in the art.

Components (A) and (B) are combined in such amounts that component (A) is 20 to 100 parts, preferably 20 to 90 parts, and more preferably 30 to 90 parts by weight, and component (B) is 0 to 80 parts, preferably 10 to 80 parts, and more preferably 10 to 70 parts by weight, provided that the total amount of components (A) and (B) is 100 parts by weight. If component (A) is too small, i.e., component (B) is too much, rubber physical properties may be significantly degraded. From the standpoints of tackiness and strength, it is preferred to use components (A) and (B) in combination.

Component (C) is an organohydrogenpolysiloxane containing at least two, preferably at least three silicon-bonded hydrogen atoms (i.e., SiH groups) per molecule. It serves as a curing agent in that SiH groups in its molecule undergo hydrosilylation or addition reaction with silicon-bonded alkenyl groups in components (A) and (B) to form crosslinks for thereby curing the composition. The organohydrogenpolysiloxane as component (C) typically has the average compositional formula (II):

R³_{b}H_{c}SiO_{(4-b-c)/2} (II)

wherein R³ is a substituted or unsubstituted monovalent hydrocarbon group of 1 to 10 carbon atoms, b is a positive number of 0.7 to 2.1, c is a positive number of 0.001 to 1.0, and the sum of b+c is 0.8 to 3.0, and contains at least 2 (specifically 2 to 200), preferably 3 to 100, and more preferably 3 to 50 silicon-bonded hydrogen atoms per molecule. Suitable monovalent hydrocarbon groups of R³ are as exemplified for R¹, although R³ is preferably free of aliphatic unsaturation. Preferably, b is 0.8 to 2.0, c is 0.01 to 1.0, and the sum of b+c is 1.0 to 2.5. The molecular structure of organohydrogenpolysiloxane may be linear, cyclic, branched or three-dimensional network. An organohydrogenpolysiloxane having a silicon count per molecule (or DOP) of about 2 to 300, especially about 4 to 150 which is liquid at room temperature (25°C) is preferred. The silicon-bonded hydrogen atom may be positioned at the end of or midway the molecular chain or both, and preferably at the end of the molecular chain because of a higher reaction rate. Examples include
both end trimethylsiloxy-blocked methylhydrogenpolysiloxane, both end trimethylsiloxy-blocked
dimethylsiloxane/methylhydrogensiloxane copolymers,
both end dimethylhydrogensiloxy-blocked dimethylpolysiloxane, both end dimethylhydrogensiloxy-blocked
dimethylsiloxane/methylhydrogensiloxane copolymers, copolymers of (CH₃)₂HSiO_{1/2} units and SiO_{4/2} units, and copolymers of (CH₃)₂HSiO_{1/2} units, SiO_{4/2} units, and (C₆H₅)SiO_{3/2} units.

The organohydrogenpolysiloxane (C) is blended in an amount of 0.5 to 20 parts, preferably 1.0 to 10 parts by weight per 100 parts by weight of components (A) and (B) combined. No satisfactory rubber strength is obtainable whenever the amount is short or excessive. Also the organohydrogenpolysiloxane (C) is blended in such an amount that the molar ratio of silicon-bonded hydrogen (SiH) in component (C) to silicon-bonded alkenyl in components (A) and (B) is in a range of 0.5/1 to 1.1/1, preferably 0.6 to 1.0. Also preferably, component (C) is blended in such an amount as to provide an organohydrogen content of 0.005 to 0.010 mol/g on the assumption that 100% addition crosslinking reaction takes place.

Herein, H/Vi represents a molar ratio of SiH groups in component (C) to alkenyl groups available in the system, and the theoretical crosslinking amount is a crosslinking amount achieved by 100% reaction of silicon-bonded hydrogen atoms (SiH groups) in component (C) added to the system with alkenyl groups available in the system. That is, the theoretical crosslinking amount is given by the amount of SiH groups when H/Vi is not more than 1, and by the amount of alkenyl groups when H/Vi is not less than 1. The amount of such functional group may be an amount based on the computational formula at the time of composition design, although it is preferred to use an actually measured value. The amount of functional group may be determined by measuring the amount of hydrogen gas evolved or the amount of unsaturated group according to well-known analytical methods, or by NMR analysis. The amount of functional group in the system is represented as X*Y mol/g wherein the amount of functional group in the molecule is X mol/g and the addition amount is Y parts by weight.

Component (D) is an addition reaction catalyst which may be selected from prior art well-known catalysts, most often platinum group metal catalysts as typified by platinum or platinum compounds while it is used in an amount of 1 to 1,000 ppm based on total alkenyl-containing organopolysiloxanes as components (A) and (B).

The tacky layer formed of the composition having components (A) to (D) combined has a hardness which is lower than the hardness of the base layer, and corresponding to a positive value of 3 to 20, preferably 4 to 15, as measured by a durometer type CSR-2 (Kobunshi Keiki Co., Ltd.). In the prior art, there are available waterproof sheets having a tacky layer having a hardness of at least 1 as measured by Asker Durometer Type C (according to SRIS 0101, by Kobunshi Keiki Co., Ltd.). The tacky layer in the invention has a lower hardness or a hardness of less than 1 on Asker C scale.

The durometer type CSR-2 is suited to measure a hardness in a region of less than 1 on Asker C hardness scale. The feel corresponds to such a hardness level that when a finger is closely placed on a tacky surface and slowly removed therefrom, the tacky surface follows the finger in a sticking manner. For the purpose of increasing the bonding force, it is advantageous to reduce the hardness of a tacky layer. Notably, at a hardness of less than 3 on the durometer CSR-2 scale it is difficult to solve the problem that when the waterproof sheet is attached to an adherend surface of porous material such as asphalt or mortar, the tacky layer which is too soft will flow away. Also the efficiency of attachment work is extremely reduced, which is undesirable. A hardness in excess of 20 on the durometer CSR-2 scale indicates less bonding force, so the bond to the adherend surface is undesirably weak. It is convenient in practice that the hardness is controlled by managing molding and curing conditions to be described later.

As an index of tackiness, a bonding force to a mortar test piece is described. A mortar test piece (Engineering Test Service Co., Ltd., made according to JIS R5201, 50 mm wide × 150 mm long × 10 mm thick) is furnished, a sheet prepared by the molding method to be described later is cut to a strip of 25 mm wide, the sheet strip on its tacky layer side is attached to the test piece, the specimen is allowed to stand at room temperature for 30 minutes, and a 180° peel test is carried out at a peeling rate of 300 mm/min. The bonding force in this test is preferably 5 to 30 N/25 mm, more preferably 10 to 25 N/25 mm.

Separately, a specimen prepared as above is immersed in city water at room temperature for 24 hours, the specimen is taken out, water droplets are wiped off, immediately after which a 180° peel test is carried out at a peeling rate of 300 mm/min. The bonding force in this test is preferably 5 to 20 N/25 mm. As an index of tackiness, a bonding force of less than 5 N/25 mm relative to the mortar test piece gives the experience that in an attempt to peel the sheet with the hand, the sheet is readily peeled by a light force, whereas a bonding force of at least 5 N/25 mm gives the experience that the sheet is not readily peeled with the hand.

Conventional techniques for forming a tacky surface include techniques of treating one surface of a single composition with a plasma, flame, acid or base so as to be tacky, and techniques of depositing a tacky layer on a base layer by dipping, coating or screen printing. These techniques are inadequate in the practice of the invention because they are difficult to control hardness and fail to provide the desired low hardness.

In consideration of the fact that the inventive product is mainly used outdoors, it is believed that the base layer must conform to thermal contraction of the material of the adherend with seasonal temperature changes. Therefore, the base layer is preferably made of elastomers. Among various types of elastomers, silicone rubber is used because of weather resistance, heat resistance and freeze resistance.

Examples of the adherend include metal plates such as annular plates, and pedestal-forming materials such as concrete, mortar, asphalt concrete, asphalt mortar, and asphalt sand, in the case of outdoor installed tanks; reinforcing steel plates, concrete, mortar, and paint films for coating in the case of bridge piers.

The silicone rubber used herein is not particularly limited and any prior art well-known silicone rubber compositions as cured may be used. The silicone rubber composition is based on a combination of components (E) and (F) below.

Component (E) is an organopolysiloxane having the average compositional formula (III):

R⁴_{d}SiO_{(4-d)/2} (III)

wherein R⁴ is each independently a substituted or unsubstituted, monovalent hydrocarbon group, at least two of groups R⁴ per molecule are aliphatic unsaturated groups, and d is a positive number of 1.95 to 2.05.

In average compositional formula (III), R⁴ is each independently selected from substituted or unsubstituted, monovalent hydrocarbon groups, typically of 1 to 12 carbon atoms, preferably 1 to 8 carbon atoms, for example, alkyl groups such as methyl, ethyl, propyl, isopropyl, butyl, isobutyl, tert-butyl, hexyl, and octyl; cycloalkyl groups such as cyclopentyl and cyclohexyl; alkenyl groups such as vinyl, allyl and propenyl; cycloalkenyl groups such as cyclohexenyl; aryl groups such as phenyl and tolyl; aralkyl groups such as benzyl and 2-phenylethyl; and substituted forms of the foregoing in which some or all hydrogen atoms are substituted by halogen atoms, cyano or the like. Inter alia, methyl, vinyl, phenyl and trifluoropropyl are preferred, with methyl and vinyl being most preferred.

Specifically, preferred are organopolysiloxanes whose backbone is composed of repeating diorganosiloxane (R⁴₂SiO_{2/2}) units which are dimethylsiloxane units, and organopolysiloxanes whose backbone has a dimethylpolysiloxane structure consisting of repeating dimethylsiloxane units, in which a diphenylsiloxane unit, methylphenylsiloxane unit, methylvinylsiloxane unit, methyl-3,3,3-trifluoropropylsiloxane unit having phenyl, vinyl, 3,3,3-trifluoropropyl or the like is introduced in a portion of the structure.

In particular, the organopolysiloxane should preferably have at least two aliphatic unsaturated groups such as alkenyl and cycloalkenyl per molecule. The aliphatic unsaturated groups are preferably alkenyl, most preferably vinyl. Herein, the aliphatic unsaturated groups preferably account for 0.01 to 20 mol%, more preferably 0.02 to 10 mol%, and even more preferably 0.02 to 5 mol% of overall R⁴ groups. The aliphatic unsaturated group may bonded to the silicon atom at the end of the molecular chain, a silicon atom midway the molecular chain, or both, preferably bonded to at least the silicon atom at the end of the molecular chain. The subscript d is a positive number of 1.95 to 2.05, preferably 1.98 to 2.02, and more preferably 1.99 to 2.01.

The preferred organopolysiloxanes as component (E) are linear organopolysiloxanes having a backbone composed of repeating diorganosiloxane (R⁴₂SiO_{2/2}) units, which are blocked at the molecular chain end with a triorganosiloxy (R⁴₃SiO_{1/2}) group such as trimethylsiloxy, dimethylphenylsiloxy, dimethylhydroxysiloxy, dimethylvinylsiloxy, methyldivinylsiloxy, or trivinylsiloxy. Especially preferred are methylvinylpolysiloxane, methylphenylvinylpolysiloxane, and methyltrifluoropropylvinylpolysiloxane.

These organopolysiloxanes may be obtained from (co)hydrolytic condensation of one or more organohalogenosilanes, or ring-opening polymerization of a cyclic polysiloxane (e.g., siloxane trimer or tetramer) in the presence of a basic or acidic catalyst. While they are basically linear diorganopolysiloxanes, a mixture of two, three or more polysiloxanes which are different in molecular weight (or degree of polymerization) or molecular structure is also acceptable as component (E).

The organopolysiloxane has a degree of polymerization (DOP) of at least 100, preferably 100 to 100,000, more preferably 1,000 to 100,000, even more preferably 2,000 to 50,000, and further preferably 3,000 to 20,000, and should preferably be non-self-flowing gum at room temperature (25°C). It is noted that DOP may be measured as weight average DOP by gel permeation chromatography (GPC) versus polystyrene standards.

### Filler (reinforcing silica) as component (F)

Fillers commonly used in silicone rubber compositions include fumed silica, precipitated silica, crystalline silica, and diatomaceous earth. The fillers may be surface treated with organopolysiloxanes, organopolysilazanes, chlorosilanes, alkoxysilanes or the like to be hydrophobic. The fillers may be used alone or in admixture of two or more. The amount of the filler added is 5 to 100 parts by weight, preferably 10 to 85 parts by weight, and more preferably 20 to 70 parts by weight per 100 parts by weight of the organopolysiloxane as component (A) for the reason that an amount of less than 5 parts by weight is too small to exert a sufficient reinforcing effect, whereas an amount of more than 100 parts by weight adversely affects workability and the resulting silicone rubber has degraded physical properties.

From the aspect of stability with time, the silicone rubber composition is cured into vulcanized rubber. The vulcanizing method is not particularly limited. The composition may be vulcanized by any vulcanization methods including organic peroxide vulcanization, vulcanization via addition reaction, vulcanization via condensation reaction, UV vulcanization, and electron beam vulcanization. Inter alia, organic peroxide vulcanization and vulcanization via addition reaction are preferred because shaping into a sheet form as intended herein is easy and may be completed within a short time by heating.

The silicone rubber composition of organic peroxide cure type may be any of well-known compositions, preferably a composition comprising an organopolysiloxane having at least two alkenyl groups per molecule and a cure effective amount (typically 1 to 10 parts by weight per 100 parts by weight of the organopolysiloxane) of an organic peroxide as a curing agent. The organic peroxide used herein is not particularly limited, and examples include acyl organic peroxides, typically p-methylbenzoyl peroxide and o-methylbenzoyl peroxide, alkyl organic peroxides, typically dicumyl peroxide and 2,5-dimethyl-2,5-bis(t-butylperoxy)hexane, percarbonate organic peroxides, and peroxyketal organic peroxides.

Also the silicone rubber composition of addition reaction cure type may be any of well-known compositions, preferably a composition comprising an alkenyl-containing organopolysiloxane having at least two alkenyl groups, typically vinyl groups per molecule, an amount (typically to provide a molar ratio of SiH groups to alkenyl groups of 0.5/1 to 4/1) of an organohydrogenpolysiloxane containing at least two, preferably at least three SiH groups, and an amount (typically 1 to 1,000 ppm based on the weight of the alkenyl-containing organopolysiloxane) of a platinum group metal addition reaction catalyst, typically platinum or platinum compounds.

As the silicone rubber composition, any commercially available products may be used. For example, as the silicone rubber composition of organic peroxide cure type, KE-551-U, KE-571-U, KE-951-U and KE-675-U are available from Shin-Etsu Chemical Co., Ltd.; and as the silicone rubber composition of addition reaction cure type, KE-1935A/B, KE-1950-60A/B, and KEG-2000-40A/B are available from Shin-Etsu Chemical Co., Ltd. although products are not limited thereto.

To the composition of which the base layer is formed, additional components other than the aforementioned may be added if desired. Suitable additional components include quartz flour, calcium carbonate; electroconductive agents such as carbon black, conductive zinc white and metal powder; and heat resistant agents such as iron oxide and cerium oxide. Also hydrosilylation regulators such as nitrogen-containing compounds, acetylene compounds, phosphorus compounds, nitrile compounds, carboxylates, tin compounds, mercury compounds, and sulfur compounds; internal parting agents such as dimethylsilicone oil; tackifiers; and thixotropic agents may be optionally added.

The waterproof sheet consisting of the base layer and the tacky layer preferably has a thickness of 0.3 to 3 mm. The tacky layer preferably has a thickness of 0.2 to 2 mm, more preferably 0.5 to 1.5 mm. A tacky layer of less than 0.2 mm is too thin to accommodate surface asperities on the adherend to which the tacky layer is bonded, whereas a tacky layer of more than 2 mm leads to a possibility of rubber failure because the rubber strength of the adherend surface depends on the tacky layer. Also, the base layer preferably has a thickness of 0.2 to 2 mm, more preferably 0.5 to 1.5 mm. A base layer of less than 0.2 mm may be insufficient to take advantage of sheet elasticity whereas a base layer of more than 2 mm has an increased weight, affects attachment, and is economically disadvantageous. In any case, the thickness of the sheet consisting of the base layer and the tacky layer is preferably up to 3 mm.

In manufacturing the waterproof sheet of the invention, the base layer is first formed. The base layer is preferably of elastomer, especially a single layer of silicone rubber although the base layer may be formed as a composite layer with a metal or another resin. For example, a sheet may be directly formed by compression molding, casting or injection molding. A sheet may be formed on a metal substrate, resin substrate or resin film by insert molding. Alternatively, dipping, coating, calendering or screen printing may be performed to form a rubber sheet integrated with another substrate. Calendering is preferred because of effective use.

Next the base layer is overlaid with the tacky layer. In one procedure, a base layer-forming composition is cured to form a base layer before the tacky layer is formed thereon. In another procedure, a base layer-forming composition is sheeted on a support film of polyethylene terephthalate (PET) or the like by calendering, and a tacky layer-forming composition is applied onto the base layer-forming composition in the unvulcanized state.

The tacky layer-forming composition is applied onto the base layer or base layer-forming composition by a suitable technique such as dipping, coating or screen printing, yielding a multilayer sheet. This procedure is advantageous in that coating can be used for shaping. In any case, preferred curing conditions include 80 to 250°C for 10 seconds to 10 minutes, more preferably 100 to 150°C for 30 seconds to 10 minutes. The tacky layer, which experiences a minimal hardness change, may be post-cured for the purposes of removing low-molecular-weight fractions or the like.

When an appropriate amount of heat commensurate to a curing system is applied, the tacky layer-forming composition is cured into a cured product having a hardness in the range of 3 to 20 on durometer CSR-2 scale. If the heat amount is short, a cured product is soft and highly tacky due to under-cure. Then the waterproof sheet becomes inefficient to work when it is applied. If the heat amount is too much, a cured product having a sufficient bonding force is not obtained, and so the waterproof sheet loses tackiness.

It is now described how to use the waterproof sheet of the invention. The application of the waterproof sheet is not limited to the following embodiments as long as the waterproof sheet function is exerted.

### Application to outdoor tanks

The waterproof sheet may be used and applied to the boundary between an outdoor tank at its bottom and a pedestal for the purpose of preventing entry of rainwater. Referring to FIGS. 2 to 6, one exemplary method is described. FIG. 2 shows an outdoor tank 30 of steel resting on and supported by a pedestal 20. The pedestal 20 may be made of concrete, mortar, asphalt concrete or asphalt mortar. The outdoor tank 30 is intended to contain a feedstock such as petroleum oils, asphalt, and gases. The tank 30 is generally cylindrical, has a diameter of 10 to 80 meters and a height of 10 to 50 meters, and is rested on the pedestal 20. FIG. 3 is an enlarged view of the boundary between the outdoor tank and the pedestal in FIG. 2. A boundary 33 is defined between the outdoor tank 30 and the pedestal 20 and exposed to the exterior, and so rainwater may penetrate through the boundary 33. On rainwater penetration, the tank 30 will rust. As shown in FIGS. 3, 4 and 5, the waterproof sheets 10 are applied so as to cover the boundary 33. Specifically, the waterproof sheets 10 shown in FIG. 1 are applied by peeling the cover film 3 therefrom, and attaching the sheets so as to bring the tacky layer 2 in contact with the pedestal 20, annular plate 32 (or tank-pedestal junction at the tank bottom), and outdoor tank wall 31 to cover the boundary 33. Further preferably, a sealant 40 is applied around the waterproof sheets 10.

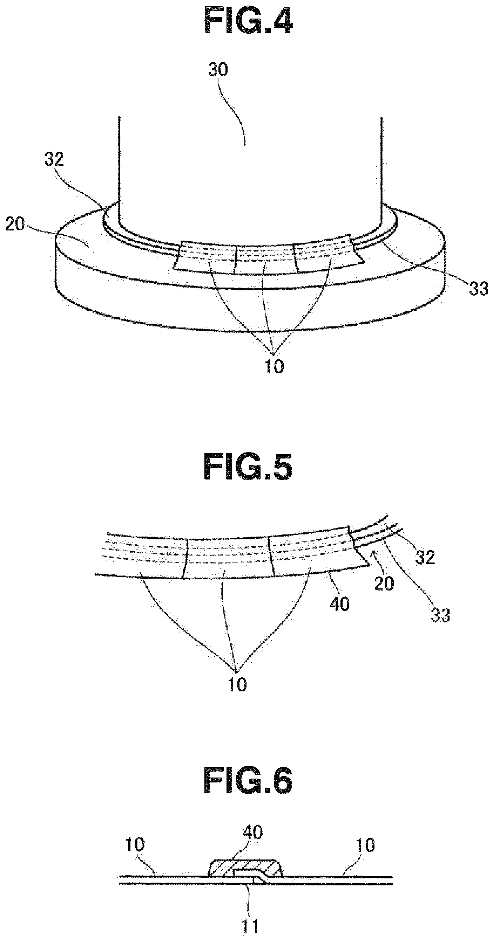

When the sealant 40 is used to bond the waterproof sheets 10, there may be used a method of turning up an outer periphery portion of each waterproof sheet 10 so that the outer periphery of the tacky layer 2 is slightly spaced apart from pedestal 20 or tank 30 and feeding the sealant 40 into the gap between sheet 10 and pedestal 20 or tank 30 for forming a sealing layer of sealant 40 along the outer periphery of tacky layer 2. The attachment of the waterproof sheets 10 to the annular plate 32 and outdoor tank wall 31 may be carried out using a length of waterproof sheet 10, although use of independent waterproof sheets 10 to the corresponding sites is preferred because the stress in the sheets 10 is mitigated so that the sheets are unlikely to peel off. FIG. 6 shows that the sealant 40 is applied to the junction between waterproof sheets 10 to establish a seal. In this case, the sealant 40 may penetrate into the junction between waterproof sheets 10 or beneath the waterproof sheet 10. Referring to FIG. 6, adjacent waterproof sheets 10 are preferably overlapped. The overlap between waterproof sheets preferably has a width of at least 5 mm, more preferably at least 10 mm, and even more preferably at least 20 mm. If the width of the overlap between waterproof sheets is less than 5 mm, peel may occur during construction, failing to completely cover the boundary, with the risk of rainwater entry. If the overlap between waterproof sheets 10 is too large, specifically more than 50 mm, then more waterproof sheets are necessary to cover the overall boundary, resulting in an increased cost.

The sealant used herein is not particularly limited. Any of well-known silicone, polysulfide and polyurethane base sealants may be used, with the silicone base sealants being preferred for affinity to the waterproof sheet materials of the invention. Suitable sealants are commercially available. For example, Sealant Master 300, Sealant 70 and Sealant 701 from Shin-Etsu Chemical Co., Ltd. may be used as the silicone base sealant.

The waterproof sheet of the invention can be applied without a need for primer, which leads to a substantial saving of the construction time. The maximum advantage is that the work during maintenance is simplified because the aging period for the primer is omitted.

### Repair of bridge pier

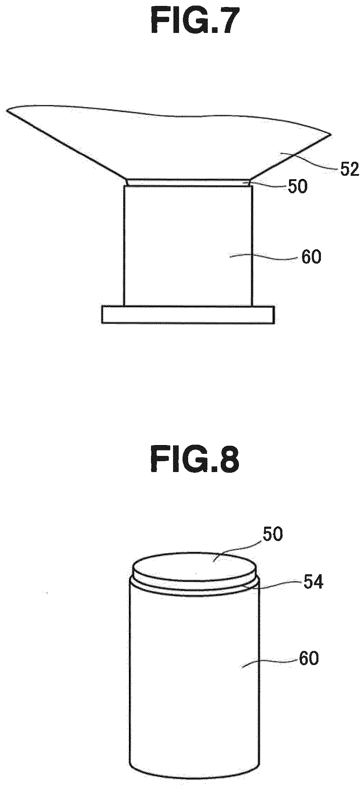

The waterproof sheet can be used and applied in repair or renovation works of bridge piers, commonly known as pier lining work, for the purpose of preventing rain or water from penetrating between the bridge pier and a reinforcement enclosing the pier. This working operation is described with reference to FIGS. 7 to 10. FIG. 7 schematically illustrates a bridge pier having a concrete surface. FIG. 8 is a perspective view of the pier as separated.

Illustrated in FIGS. 7 and 8 are a pier 50 of concrete, a bridge 52 of concrete, and a reinforcement 60.

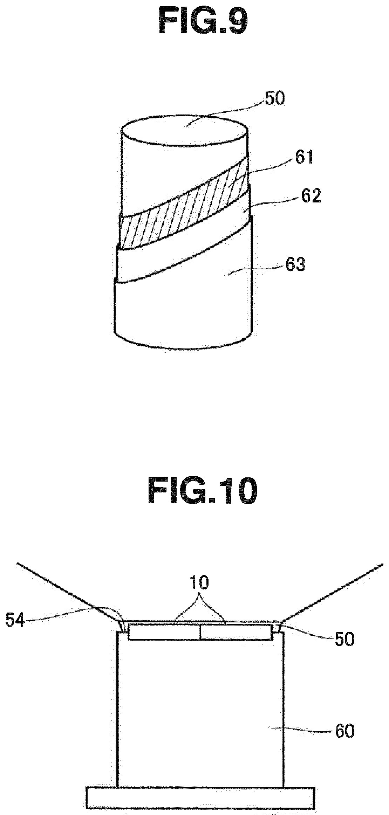

As one example of the bridge pier repair work, the steel-plate lining work is described. As best shown in FIG. 9, the existing pier 50 of concrete defines an interior surface, which is repaired by wrapping the reinforcement 60 therearound. Specifically, a sealer layer 61 and a shrinkage-compensating mortar layer 62 are sequentially deposited around the pier 50, and a steel plate 63 is wrapped as the outermost layer. Although the steel plate is often coated with anti-corrosive paint, the anti-corrosive coating is not complete at the boundary 54 between the concrete pier 50 and the reinforcement 60. Then, after the completion of repair work, water originating from rain, snow or mist will deposit on and penetrate into the boundary, causing rust. As water penetrates through the boundary, it acts to reduce the bond strength of the sealer innermost layer and to render the shrinkage-compensating mortar layer brittle and liable to peel off. These problems can be solved by attaching a waterproof sheet 10 to the adherend region across the boundary 54 as shown in FIG. 10. The adherend region may be pre-treated so that the sheet may be more effectively attached thereto. The pre-treatment of the adherend region is not always necessary when the waterproof sheet has tackiness. The waterproof sheet at its tacky layer is attached to the adherend region.

The waterproof sheet 10 is attached to the adherend region so that the sheet may completely cover the boundary 54. A single waterproof sheet may be used to cover the boundary 54. However, it is more likely to use a plurality of waterproof sheets and arrange them in juxtaposition along the boundary 54 whereby the sheets together cover the entire boundary 54. In this case, the boundary region can be exposed between adjacent waterproof sheets. Preferably a sealant is applied around the waterproof sheets 10 along the peripheral edges of the waterproof sheets 10 on the pier 50 and reinforcement 60 sides. The sealant is the same as described above.

### EXAMPLES

Examples and Comparative Examples are given below by way of illustration and not by way of limitation. All parts and % are by weight. The sheets obtained in Examples and Comparative Examples are evaluated by the methods described later, with the results shown in Table 1.

### Example 1

A silicone rubber composition of addition reaction cure type was prepared by adding 0.5 part of C-19A and 2.4 parts of C-19B (both, Shin-Etsu Chemical Co., Ltd.) as crosslinker to millable dimethylsilicone rubber compound KE-675-U (Shin-Etsu Chemical Co., Ltd.) and milling on a two-roll mill. The composition was calendered on an embossed PET film of 100 µm thick to form a sheet of 0.7 mm thick, continuously heat cured in a heating furnace at 140°C for 10 minutes, yielding a base layer A laid on the PET film.

On the other hand, 92.5 parts of dimethylpolysiloxane blocked at both ends with dimethylvinylsiloxy groups and having an average DOP of 1,000, and a 50% toluene solution containing 7.5 parts of a resinous copolymer consisting of (CH₂=CH)(CH₃)₂SiO_{1/2} units, (CH₃)₃SiO_{1/2} units, and SiO₂ units (wherein a molar ratio {(CH₂=CH)(CH₃)₂SiO_{1/2}+(CH₃)₃SiO_{1/2}}/SiO₂ = 0.85, CH₂=CH- content: 0.0008 mol/g), which is solid at room temperature (25°C), were admitted into a mixer, mixed for 30 minutes, after which the toluene was completely distilled off (alkenyl content: 0.00865 mol/g). To 100 parts of this silicone base were added 6.0 parts of a resinous copolymer composed mainly of (CH₃)₂HSiO_{1/2} units and SiO₂ units and having SiH groups (SiH content: 0.0013 mol/g) as a crosslinker, and 0.1 part of ethynyl cyclohexanol as a reaction inhibitor. Stirring was continued for 15 minutes, yielding silicone rubber composition A. This silicone rubber composition A was mixed with 0.2 part of platinum catalyst (Pt concentration 1%), yielding tacky (or pressure-sensitive adhesive) composition A.

The tacky composition A was coated on the base layer A to a thickness of 1.0 mm using a comma coater, and heat cured in a heating furnace at 140°C for 5 minutes to form a tacky layer. A polyethylene (PE) sheet was joined to the tacky layer, yielding a two-layer cured sheet laminate A. The PET film on the base layer side and the PE film on the tacky layer side were peeled from the resulting sheet laminate, which was evaluated by the following methods, with the results shown in Table 1.

In Examples and Comparative Examples below, the evaluation methods and applying method are the same as in Example 1.

### Example 2

Base layer A was obtained as in Example 1. Silicone rubber composition B, tacky composition B, and two-layer cured sheet laminate B were obtained as in Example 1 aside from changing the crosslinker to 2.2 parts of a resinous copolymer composed mainly of (CH₃)₂HSiO_{1/2} units and SiO₂ units and having SiH groups (SiH content: 0.0031 mol/g).

### Comparative Example 1

Base layer A was obtained as in Example 1.

On the other hand, 75 parts of dimethylpolysiloxane blocked at both ends with dimethylvinylsiloxy groups and having an average DOP of 1,000, and a 50% toluene solution containing 25 parts of a resinous copolymer consisting of (CH₂=CH)(CH₃)₂SiO_{1/2} units, (CH₃)₃SiO_{1/2} units, and SiO₂ units (wherein a molar ratio {(CH₂=CH)(CH₃)₂SiO_{1/2}+(CH₃)₃SiO_{1/2}}/SiO₂ = 0.85, CH₂=CH- content: 0.0008 mol/g), which is solid at room temperature (25°C), were admitted into a mixer, mixed for 30 minutes, after which the toluene was completely distilled off (alkenyl content: 0.0230 mol/g). To 100 parts of this silicone base were added 1.8 parts of a resinous copolymer composed mainly of (CH₃)₂HSiO_{1/2} units and SiO₂ units and having SiH groups (SiH content: 0.0046 mol/g) as a crosslinker, and 0.1 part of ethynyl cyclohexanol as a reaction inhibitor. Stirring was continued for 15 minutes, yielding silicone rubber composition C. This silicone rubber composition C was mixed with 0.2 part of platinum catalyst (Pt concentration 1%), yielding tacky composition C.

The tacky composition C was coated on the base layer A to a thickness of 1.0 mm using a comma coater, and heat cured in a heating furnace at 140°C for 5 minutes to form a tacky layer. A PE sheet was joined to the tacky layer, yielding a two-layer cured sheet laminate C. The PET film on the base layer side and the PE film on the tacky layer side were peeled from the resulting sheet laminate.

### Comparative Example 2

Base layer A was obtained as in Example 1. Silicone rubber composition D, tacky composition D, and two-layer cured sheet laminate D were obtained as in Comparative Example 1 aside from changing the crosslinker to 16 parts of a resinous copolymer composed mainly of (CH₃)₂HSiO_{1/2} units and SiO₂ units and having SiH groups (SiH content: 0.0013 mol/g).

### Comparative Example 3

Million TP Sealant based on unvulcanized butyl rubber (purchased from Kyowa Ltd.) was used.

### Comparative Example 4

Guard Fron comprising a base layer of structure having fluoro-resin overlaid with aluminum foil and protective film, and a tacky layer of synthetic rubber laid thereon (by Tokai Aluminum Foil Co., Ltd.) was used.

### Comparative Example 5

A sample was prepared by brush coating one surface of an oil-impregnated non-woven fabric Nitoharmac XG (Nitto Denko Corp.) with a suitable amount of an overcoat material Nitoharmac XG-T (Nitto Denko Corp.) and air drying at room temperature for 1 hour.

### Comparative Example 6

An oil-impregnated non-woven fabric PetroGuard FC (purchased from Cosmo-Eco Support Co., Ltd.) was used. A suitable amount of an undercoat material PetroGuard P (purchased from Cosmo-Eco Support Co., Ltd.) was coated onto a test piece with a spatula before the sample was attached to the test piece.

### Evaluation items

### • Workability

In consideration of handling during waterproof construction, a sample was rated poor (×) when it was difficult to cut to a desired size, and sample components were likely to stick to and stain the hand, clothes and surrounding, and good (O) when it could be worked without problems.

### • Measurement of tacky layer hardness

The tacky layer on the sheet was measured for hardness by an Asker Durometer Type C (Kobunshi Keiki Co., Ltd., according to JIS K7312). When a hardness of less than 1 on Durometer Type C scale was recorded, the hardness was measured again using Durometer Type CSR-2 (Kobunshi Keiki Co., Ltd.) which is suited for hardness measurement in a lower hardness region.

### • Initial tackiness (bonding force)

The sheet was cut into a strip of 25 mm wide and 150 mm long, the sheet strip on its tacky layer side was attached to a mortar test piece (Engineering Test Service Co., Ltd., made according to JIS R5201, 50 mm wide × 150 mm long × 10 mm thick) such that the strip was located at the center of the test piece in width direction, and the specimen was allowed to stand on a horizontal plane at room temperature for 30 minutes. Thereafter, the tacky layer was peeled from the mortar test piece at a rate of 300 mm/min and an angle of 180°, during which a bonding force was measured.

### • Tackiness (bonding force) after 1 day water immersion

A test specimen was prepared as in the initial tackiness test. The sheet strip on its tacky layer side was attached to a mortar test piece, and the specimen was allowed to stand on a horizontal plane at room temperature for 30 minutes. Thereafter, the specimen was immersed in city water at room temperature for 24 hours, taken out and wiped to remove water droplets. Immediately thereafter, the tacky layer was peeled from the mortar test piece at a rate of 300 mm/min and an angle of 180°, during which a bonding force was measured.

Also, on manual peeling, it was inspected whether the sample was bonded to the mortar test piece. The sample was rated poor (×) when it was readily peeled with a light force and good (Q) when it could not be peeled with an equivalent force, i.e., was kept bonded to the test piece.

### • Age stability (thermally accelerated test)

A specimen was prepared as in the initial tackiness test. The sheet strip on its tacky layer side was attached to a mortar test piece, and the specimen was allowed to stand on a horizontal plane at room temperature for 30 minutes. Thereafter, the specimen was rested on a hot plate which was set at 140°C. With a lapse of time, the outer appearance of the specimen was observed with respect to surface state change, shape change, color change, and tackiness change. The specimen was rated poor (×) when changes from the initial state were observed after 9-24 hours, mediocre (△) when changes were observed until 168 hours, and good (○) when no significant changes were observed even after 168 hours.

**Table 1**

| | | | Example | | Comparative Example | | | | | |
|---|---|---|---|---|---|---|---|---|---|---|
| | | | 1 | 2 | 1 | 2 | 3 | 4 | 5 | 6 |
| Theoretical crosslinking amount (mol/g) | | | 0.0078 | 0.0068 | 0.0083 | 0.0208 | | | | |
| H/Vi | | | 0.90 | 0.79 | 0.36 | 0.90 | | | | |
| Workability | | | | | | | | | | |
| | Cut | | ○ | ○ | ○ | × | × | ○ | × | × |
| | Stain | | ○ | ○ | ○ | × | ○ | ○ | × | × |
| Tacky layer hardness on Asker C scale | | | <1 | <1 | <1 | 15 | 40 | 70 | *1 | *1 |
| Tacky layer hardness on CSR-2 scale | | | 13 | 12 | 22 | 50 | | | | |
| Tackiness | | | | | | | | | | |
| | Initial bonding force (N/25 mm) | | 21 | 22 | 4 | | 17 | 21 | 0.8 | 0.8 |
| | Bonding force after 1 day water immersion (N/25 mm) | | 12 | 13 | 1.0 | | 1.3 | 0.2 | 0.4 | 0.4 |
| | Bond after water immersion | | ○ | ○ | × | | × | × | × | × |
| Age stability (thermally accelerated test) | | | | | | | | | | |
| | Surface state change | | ○ | ○ | ○ | | × | ○ | ○ | x |
| | | 140°C/9 hr | unchanged | unchanged | unchanged | | sticky | unchanged | unchanged | sticky |
| | | 140°C/24 hr | unchanged | unchanged | unchanged | | hardened | unchanged | unchanged | sticky |
| | | 140°C/168 hr | unchanged | unchanged | unchanged | | cracked | unchanged | unchanged | sticky |
| | Shape change | | ○ | ○ | ○ | | × | ○ | × | × |
| | | 140°C/9 hr | unchanged | unchanged | unchanged | | shrunk | unchanged | shrunk | shrunk |
| | | 140°C/24 hr | unchanged | unchanged | unchanged | | shrunk | unchanged | shrunk | shrunk |
| | | 140°C/168 hr | unchanged | unchanged | unchanged | | shrunk | unchanged | shrunk | shrunk |
| | Color change | | ○ | ○ | ○ | | △ | ○ | △ | x |
| | | 140°C/ 9 hr | unchanged | unchanged | unchanged | | unchanged | unchanged | unchanged | discolored |
| | | 140°C/24 hr | unchanged | unchanged | unchanged | | unchanged | unchanged | unchanged | discolored |
| | | 140°C/168 hr | unchanged | unchanged | unchanged | | discolored | unchanged | discolored | discolored |
| | Tackiness change | | ○ | ○ | *2 | | × | × | × | × |
| | | 140°C/ 9 hr | unchanged | unchanged | | | degraded | degraded | degraded | degraded |
| | | 140°C/24 hr | unchanged | unchanged | | | degraded | degraded | degraded | degraded |
| | | 140°C/168 hr | unchanged | unchanged | | | degraded | degraded | degraded | degraded |

| | | | | | | | | | | |
|---|---|---|---|---|---|---|---|---|---|---|
| *1 hardness not measurable due to contact with fibers *2 no initial tack, no further properties compared | | | | | | | | | | |

### REFERENCE SIGNS LIST

- 1: Base layer
- 2: Tacky layer
- 3: Cover film
- 10: Waterproof sheet
- 11: Overlap between sheets
- 20: Pedestal
- 30: Outdoor tank
- 31: Tank wall
- 32: Annular plate
- 33: Boundary between outdoor tank and pedestal
- 40: Sealant
- 50: Pier (existing concrete)
- 54: Boundary between pier and reinforcement
- 60: Reinforcement
- 61: Sealer
- 62: Shrinkage-compensating mortar
- 63: Steel plate

## Claims

1. A waterproof sheet (10) for preventing penetration of rain or water, comprising a base layer (1) composed of silicone rubber and a tacky layer (2) laid thereon, **characterized in that**
the tacky layer (2) is formed of an addition reaction-cured silicone composition having a hardness of 3 to 20 as measured by durometer type CSR-2, obtainable by curing an addition reaction-curable silicone composition having a theoretical crosslinking amount of 0.005 to 0.01 mol/g and a ratio SiH/alkenyl, being the ratio in molar amount of SiH groups to alkenyl groups, in the range 0.5 to 1.1,
wherein the addition reaction-curable silicone composition for the tacky layer (2) comprises:
(A) 20 to 100 parts by weight of an organopolysiloxane containing at least two silicon-bonded alkenyl groups per molecule,
(B) 0 to 80 parts by weight of a resinous copolymer predominantly comprising R²₃SiO_{1/2} units and SiO₂ units, wherein R² is a substituted or unsubstituted monovalent hydrocarbon group, and R² contains an alkenyl group, the total amount of components (A) and (B) being 100 parts by weight,
(C) organohydrogenpolysiloxane containing at least two silicon-bonded hydrogen atoms, in an amount of 0.5 to 20 parts by weight per 100 parts by weight of components (A) and (B) combined, and
(D) an addition reaction catalyst in an amount of 1 to 1,000 ppm based on the total alkenyl-containing organopolysiloxanes as components (A) and (B).

2. Waterproof sheet of claim 1 in which said hardness of the tacky layer composition as measured by durometer type CSR-2 is from 4 to 15.

3. Waterproof sheet of claim 1 or 2 wherein the amount of component (B) is 10 to 80 parts by weight per 100 parts by weight of components (A) and (B) combined.

4. Waterproof sheet of any one of the preceding claims wherein the waterproof sheet consisting of the base layer (1) and the tacky layer (2) has a thickness of 0.3 to 3 mm and the tacky layer (2) has a thickness of 0.2 to 2 mm.

5. Waterproof sheet of any one of the preceding claims wherein the waterproof sheet has a said tacky layer (2) on one surface and the other surface is non-tacky, provided that the sheet may comprise a releasable cover film (3) laid on the tacky layer (2).

6. Waterproof sheet of any one of the preceding claims wherein the tacky layer (2) has pressure-sensitive adhesive properties such that it has a bonding force of 5 to 30 N/25 mm, measured at a peel rate of 300 mm/min and an angle of 180°, when a sample 25 mm wide strip of the sheet is attached to a mortar test piece of 50 × 150 × 10 mm made according to JIS R5201 and allowed to stand at room temperature for 30 minutes.

7. Waterproof sheet of claim 6 having a said bonding force of 5 to 20 N/25 mm after immersion of such a sample attached to a mortar test piece in water at room temperature for 24 hours.

8. Waterproofing construction method comprising the step of attaching a waterproof sheet or a plurality of waterproof sheets (10), as recited in any one of claims 1 to 7, to an adherend including a site where it is necessary to prevent penetration of water.

9. Waterproofing construction method of claim 8 using a plurality of the waterproof sheets (10), the waterproof sheets (10) being juxtaposed in an overlapping relationship to cover the adherend with the waterproof sheets in a liquid-tight manner, the width of the overlap between two adjoining sheets being at least 5 mm.

10. Waterproofing construction method of claim 8 or 9 wherein the waterproof sheet or sheets (10) are directly attached to the adherend without a primer.

11. Waterproofing construction method of any one of claims 8 to 10 wherein a sealant (40) is applied to edge portions of the attached waterproof sheet or sheets (10).

12. Waterproofing construction method of any one of claims 8 to 11 wherein at least a portion of the adherend which is covered with the tacky layer (2) is made of a porous material.

13. Waterproofing construction method of any one of claims 8 to 12 wherein the adherend is at a boundary (33) between a pedestal (20) and the bottom of an outdoor tank (30) rested on the pedestal.

14. Waterproofing construction method of any one of claims 8 to 12 wherein the adherend is at a boundary between a bridge pier (50) of concrete and a reinforcement (60) applied to the bridge pier.

## Patentansprüche

1. Wasserfeste Folienbahn (10) zum Verhindern des Eindringens von Regen oder Wasser, die eine aus Silikonkautschuk bestehende Basisschicht (1) und eine darauf angeordnete klebrige Schicht (2) umfasst, **dadurch gekennzeichnet, dass**
die klebrige Schicht (2) aus einer durch Additionsreaktionen gehärteten Silikonzusammensetzung mit einer mittels eines Durometers vom Typ CSR-2 gemessenen Härte von 3 bis 2 besteht, die durch Härten einer durch Additionsreaktionen härtbaren Silikonzusammensetzung mit einem theoretischen Vernetzungsgrad von 0,005 bis 0,01 mol/g und einem SiH/Alkenyl-Verhältnis, das das Molverhältnis von SiH-Gruppen zu Alkenyl-Gruppen ist, im Bereich von 0,5 bis 1,1 erhältlich ist,
wobei die durch Additionsreaktionen härtbare Silikonzusammensetzung für die klebrige Schicht (2) Folgendes umfasst:
(A) 20 bis 100 Gewichtsteile eines Organopolysiloxans, das zumindest zwei Silicium-gebundene Alkenylgruppen pro Molekül enthält,
(B) 0 bis 80 Gewichtsteile eines Harz-Copolymers, das überwiegend R²₃SiO_{1/2}-Einheiten und SiO₂-Einheiten umfasst, worin R² eine substituierte oder unsubstituierte einwertige Kohlenwasserstoffgruppe ist und R² eine Alkenylgruppe enthält, wobei die Gesamtmenge der Komponenten (A) und (B) 100 Gewichtszeile beträgt,
(C) Organohydrogenpolysiloxan, das zumindest zwei Silicium-gebundene Wasserstoffatome enthält, in einer Menge von 0,5 bis 20 Gewichtsteilen pro 100 Gewichtsteile der Komponenten (A) und (B) zusammen, und
(D) einen Additionsreaktionskatalysator in einer Menge von 1 bis 1.000 ppm, bezogen auf die Gesamtheit der Alkenyl enthaltenden Organopolysiloxane als Komponenten (A) und (B).

2. Wasserfeste Folienbahn nach Anspruch 1, in der die mittels eines Durometers vom Typ CSR-2 gemessene Härte der Zusammensetzung der klebrigen Schicht 4 bis 15 beträgt.

3. Wasserfeste Folienbahn nach Anspruch 1 oder 2, wobei die Menge der Komponente (B) 10 bis 80 Gewichtsteile pro 100 Gewichtsteile der Komponenten (A) und (B) zusammen beträgt.

4. Wasserfeste Folienbahn nach einem der vorangegangenen Ansprüche, wobei die wasserfeste Folienbahn, die aus der Basisschicht (1) und der klebrigen Schicht (2) besteht, eine Dicke von 0,3 bis 3 mm aufweist und die klebrige Schicht (2) eine Dicke von 0,2 bis 2 mm aufweist.

5. Wasserfeste Folienbahn nach einem der vorangegangenen Ansprüche, wobei die wasserfeste Folienbahn auf einer Oberfläche eine klebrige Schicht (2) aufweist und die andere Oberfläche nicht klebrig ist, mit der Maßgabe, dass die Folienbahn gegebenenfalls eine ablösbare Deckfolie (3) umfasst, die auf der klebrigen Schicht (2) angeordnet ist.

6. Wasserfeste Folienbahn nach einem der vorangegangenen Ansprüche, wobei die klebrige Schicht (2) derartige Haftkleber-Eigenschaften aufweist, dass sie eine bei einer Abziehgeschwindigkeit von 300 mm/min und in einem Winkel von 180° gemessene Haftfestigkeit von 5 bis 30 N/25 mm aufweist, wenn ein 25 mm breiter Probestreifen der Schicht auf ein Mörtel-Teststück gemäß JIS R5201 von 50 × 150 × 10 mm aufgebracht und 30 Minuten lang bei Raumtemperatur stehen gelassen wird.

7. Wasserfeste Folienbahn nach Anspruch 6, die nach 24-stündigem Eintauchen einer solchen auf ein Mörtel-Teststück aufgebrachten Probe in Wasser bei Raumtemperatur eine Haftfestigkeit von 5 bis 20 N/25 mm aufweist.

8. Verfahren zum Bauen einer wasserfesten Konstruktion, das den Schritt des Aufbringens einer wasserfesten Folienbahn oder einer Vielzahl von wasserfesten Folienbahnen (10) nach einem der Ansprüche 1 bis 7 auf eine Fügefläche umfasst, die eine Stelle umfasst, an der das Verhindern des Eindringens von Wasser erforderlich ist.

9. Verfahren zum Bauen einer wasserfesten Konstruktion nach Anspruch 8 unter Verwendung einer Vielzahl von wasserfesten Folienbahnen (10), wobei die wasserfesten Folienbahnen (10) in überlappend nebeneinander angeordnet werden, um die Fügefläche auf flüssigkeitsdichte Weise mit den wasserfesten Folienbahnen zu bedecken, wobei die Breite der Überlappung von zwei nebeneinander liegenden Folienbahnen zumindest 5 mm beträgt.

10. Verfahren zum Bauen einer wasserfesten Konstruktion nach Anspruch 8 oder 9, wobei die wasserfeste(n) Folienbahn(en) (10) ohne Primer direkt auf die Fügefläche aufgebracht wird/werden.

11. Verfahren zum Bauen einer wasserfesten Konstruktion nach Anspruch 8 bis 10, wobei ein Dichtungsmittel (40) auf Randabschnitte der aufgebrachten wasserfesten Folienbahn(en) (10) aufgetragen wird.

12. Verfahren zum Bauen einer wasserfesten Konstruktion nach einem der Ansprüche 8 bis 11, wobei zumindest ein Abschnitt der Fügefläche, die mit der klebrigen Schicht (2) bedeckt ist, aus einem porösen Material besteht.

13. Verfahren zum Bauen einer wasserfesten Konstruktion nach einem der Ansprüche 8 bis 12, wobei die Fügefläche an einer Grenze (33) zwischen einem Sockel (20) und dem Boden eines im Freien befindlichen Behälters (30), der auf dem Sockel ruht, angeordnet ist.

14. Verfahren zum Bauen einer wasserfesten Konstruktion nach einem der Ansprüche 8 bis 12, wobei die Fügefläche an einer Grenze zwischen einem Brückenpfeiler (50) aus Beton und einer auf den Brückenpfeiler aufgebrachten Verstärkung (60) angeordnet ist.

## Revendications

1. Feuille imperméable (10) pour empêcher une pénétration de pluie ou d'eau, comprenant une couche de base (1) constituée de caoutchouc de silicone et une couche collante (2) déposée sur celle-ci, **caractérisée en ce que**
la couche collante (2) est formée d'une composition de silicone durcie par réaction d'addition présentant une dureté de 3 à 20 telle que mesurée par duromètre de type CSR-2, pouvant être obtenue par durcissement d'une composition de silicone durcissable par réaction d'addition présentant une quantité de réticulation théorique de 0,005 à 0,01 mol/g et un rapport SiH/alcényle, étant le rapport en quantité molaire de groupes SiH à des groupes alcényle, dans la plage de 0,5 à 1,1,
dans laquelle la composition de silicone durcissable par réaction d'addition pour la couche collante (2) comprend :
(A) de 20 à 100 parties en poids d'un organopolysiloxane contenant au moins deux groupes alcényle liés au silicium par molécule,
(B) de 0 à 80 parties en poids d'un copolymère résineux comprenant principalement des unités R²₃SiO_{1/2} et des unités SiO₂, où R² est un groupe hydrocarboné monovalent substitué ou non substitué, et R² contient un groupe alcényle, la quantité totale des composants (A) et (B) étant de 100 parties en poids,
(C) un organohydrogénpolysiloxane contenant au moins deux atomes d'hydrogène liés au silicium, en une quantité de 0,5 à 20 parties en poids pour 100 parties en poids des composants (A) et (B) combinés, et
(D) un catalyseur de réaction d'addition en une quantité de 1 à 1 000 ppm sur la base des organopolysiloxanes contenant un alcényle en tant que composants (A) et (B).

2. Feuille imperméable selon la revendication 1, dans laquelle ladite dureté de la composition de couche collante telle que mesurée par duromètre de type CSR-2 est de 4 à 15.

3. Feuille imperméable selon la revendication 1 ou 2, dans laquelle la quantité du composant (B) est de 10 à 80 parties en poids pour 100 parties en poids des composants (A) et (B) combinés.

4. Feuille imperméable selon l'une quelconque des revendications précédentes, dans laquelle la feuille imperméable constituée de la couche de base (1) et de la couche collante (2) présente une épaisseur de 0,3 à 3 mm et la couche collante (2) présente une épaisseur de 0,2 à 2 mm.

5. Feuille imperméable selon l'une quelconque des revendications précédentes, dans laquelle la feuille imperméable présente une dite couche collante (2) sur une surface et l'autre surface n'est pas collante, à condition que la feuille puisse comprendre un film de recouvrement détachable (3) déposé sur la couche collante (2).

6. Feuille imperméable selon l'une quelconque des revendications précédentes, dans laquelle la couche collante (2) présente des propriétés d'adhésif sensible à la pression telles qu'elle présente une force de liaison de 5 à 30 N/25 mm, mesurée à une vitesse de pelage de 300 mm/min et un angle de 180°, lorsqu'un échantillon de bande de 25 mm de largeur de la feuille est fixé à une pièce de test de mortier de 50 × 150 × 10 mm fabriquée selon JIS R5201 et laissée reposer à température ambiante pendant 30 minutes.

7. Feuille imperméable selon la revendication 6, présentant une dite force de liaison de 5 à 20 N/25 mm après immersion d'un tel échantillon attaché à une pièce de test de mortier dans de l'eau à température ambiante pendant 24 heures.

8. Procédé de construction d'imperméabilisation comprenant l'étape consistant à fixer une feuille imperméable ou une pluralité de feuilles imperméables (10), selon l'une quelconque des revendications 1 à 7, à un support d'adhérence incluant un site où il est nécessaire d'empêcher une pénétration d'eau.

9. Procédé de construction d'imperméabilisation selon la revendication 8, utilisant une pluralité de feuilles imperméables (10), les feuilles imperméables (10) étant juxtaposées dans une relation de chevauchement pour recouvrir le support d'adhérence avec les feuilles imperméables d'une manière étanche aux liquides, la largeur du chevauchement entre deux feuilles adjacentes étant d'au moins 5 mm.

10. Procédé de construction d'imperméabilisation selon la revendication 8 ou 9, dans lequel la ou les feuilles imperméables (10) sont fixées directement au support d'adhérence sans primaire.

11. Procédé de construction d'imperméabilisation selon l'une quelconque des revendications 8 à 10, dans lequel un matériau d'étanchéité (40) est appliqué sur des parties de bord de la feuille ou des feuilles imperméables (10) fixées.

12. Procédé de construction d'imperméabilisation selon l'une quelconque des revendications 8 à 11, dans lequel au moins une partie du support d'adhérence qui est recouverte de la couche collante (2) est constituée d'un matériau poreux.

13. Procédé de construction d'imperméabilisation selon l'une quelconque des revendications 8 à 12, dans lequel le support d'adhérence se trouve à une limite (33) entre un socle (20) et le fond d'un réservoir extérieur (30) reposant sur le socle.

14. Procédé de construction d'imperméabilisation selon l'une quelconque des revendications 8 à 12, dans lequel le support d'adhérence se trouve à une limite entre un pilier de pont (50) en béton et un renforcement (60) appliqué au pilier de pont.
